# EUROPÄISCHE PATENTSCHRIFT

(11) **EP 3 425 188 B1**
(45) Veröffentlichungstag und Bekanntmachung des Hinweises auf die Patenterteilung: **11.11.2020**
(21) Anmeldenummer: 18182227.1
(22) Anmeldetag: 06.07.2018
(51) Int. Cl.: F02D 19/06, F02D 19/08, F02D 19/12, F02D 41/00, F02D 19/10

(54) **VERFAHREN ZUM BETREIBEN EINES VERBRENNUNGSMOTORS UND VERBRENNUNGSMOTOR**
METHOD FOR OPERATING A COMBUSTION ENGINE AND COMBUSTION ENGINE
PROCÉDÉ DE FONCTIONNEMENT D'UN MOTEUR À COMBUSTION INTERNE ET MOTEUR À COMBUSTION INTERNE

(30) Priorität: 07.07.2017 AT 505662017
(43) Veröffentlichungstag der Anmeldung: 09.01.2019
(73) Patentinhaber: PGES Günther Herdin technisches Büro GmbH, 6200 Jenbach (AT)
(72) Erfinder: HERDIN, Ruediger, 2483 Ebreichsdorf (AT); FRANK, Clemens, 3430 Tulln an der Donau (AT)
(74) Vertreter: Beer & Partner Patentanwälte KG

(56) Entgegenhaltungen:
- EP-A1- 1 448 884
- WO-A1-2004/101972
- JP-A- 2006 052 686
- US-A1- 2004 055 281
- US-A1- 2015 136 047

## Beschreibung

Die Erfindung betrifft ein Verfahren zum Betreiben eines Verbrennungsmotors, bei dem in einem Verbrennungstakt ein Luft-Brennstoff-Gemisch verbrannt wird, wobei im Verbrennungstakt sequentiell unterschiedliche Brennstoffe verbrannt werden, und wobei als erster Brennstoff Wasserstoff verwendet wird.
Bei der Umsetzung von Brennstoffen zur Fortbewegung und Energieerzeugung haben sich Verbrennungsmotoren durchgesetzt. Gasturbinen werden wegen ihrer hohen Leistungsdichte vor allem in der Luftfahrt verwendet und für Energieerzeugung vorwiegend in Leistungsgrößen größer 10MW eingesetzt. Bei den Brennstoffen werden neben Benzin und Dieselfraktionen auch Erdgas und andere gasförmige Brennstoffe immer wichtiger. Für methanhaltige Gase, wie Erdgas und Biogas, ist die Technologie schon sehr fortgeschritten und am Markt etabliert.

Wasserstoff ist zwar wegen Schwierigkeiten bei der Lagerung und beim Explosionsschutz problematisch, bringt aber mehrere eklatante Vorteile mit sich, die sich auszugsweise mit der einfachen Erzeugbarkeit und der ökologisch günstigen Umsetzung bei der Verbrennung zu Wasser kurz zusammenfassen lassen.

Wasserstoff stellt für den Betrieb von Kolbenmaschinen als Verbrennungsmotoren aufgrund der hohen Zündwilligkeit jedoch eine große Herausforderung dar. Dies liegt einerseits an der hohen Klopfneigung des Gases bei fetteren Bedingungen und andererseits bei extremem Magerbetrieb an den niedrigen Temperaturen, die bei der Verbrennung entstehen. Die hohe Klopfneigung erfordert eine niedrige Verdichtung und einen hohen Luftüberschuss bei der Verbrennung. Dadurch ergeben sich aber geringe Abgastemperaturen, welche sich negativ auf eine unter Umständen erforderliche Turboaufladung auswirken.

Motoren welche am Markt aktuell mit Wasserstoff betrieben werden, haben dementsprechend eine geringe Leistungsdichte und haben durch die teure Turboaufladung einen schwerwiegenden Kostennachteil.

Übliche Wasserstoffmotoren arbeiten als Ottomotoren mit Funkenzündung. In einigen Fällen werden für die Wasserstoffverbrennung sogenannte "Dual-Fuel-Motoren" verwendet. Bei diesen wird ein adaptierter Dieselmotor verwendet und Teile des Dieselbrennstoffes werden durch Wasserstoff ersetzt. Diese Motoren arbeiten vom Prinzip her wie ein Ottomotor, wobei die Zündung aber nicht durch einen Funken, sondern durch den Brennstoffstrahl erfolgt. Generell ist hier zu bemerken, dass die Entzündung des Dieselkraftstoffes ein hohes Verdichtungsverhältnis benötigt und somit auch die Klopfgrenzen zu niedrigeren Motorlasten abgesenkt werden müssen.

Verfahren zum Betreiben eines Verbrennungsmotors bei denen im Verbrennungstakt sequentiell unterschiedliche Brennstoffe verbrannt werden sind beispielsweise aus JP 2006052686 A und US 2015/0136047 A1 bekannt.

Der Nachteil dieses Konzeptes ist daher die sehr begrenzte Substitution des Diesels, da hier einerseits der Diesel als Zündquelle verwendet wird, somit kein reiner Wasserstoffbetrieb möglich ist, und der Motor andererseits durch den mengenmäßig reduzierten Dieselkraftstoff nicht die erforderliche Leistung erbringen kann.

Der Erfindung liegt daher die Aufgabe zugrunde, ein Verfahren der eingangs genannten Art zu schaffen, bei dem in erhöhtem Maß auch Brennstoffe eingesetzt werden können, deren Einsatz mit bestimmten Beschränkungen verbunden ist, wie dies beispielsweise bei Wasserstoff der Fall ist.

Gelöst wird diese Aufgabe bei einem Verfahren der eingangs genannten Art dadurch, dass als zweiter Brennstoff Diesel verwendet wird, und dass der zweite Brennstoff in den fast vollständig ausgebrannten Brennraum eingespritzt wird, nachdem wenigstens 80% des ersten Brennstoffes verbrannt sind.

Durch das erfindungsgemäße Verfahren mit der sequentiellen Verbrennung unterschiedlicher Brennstoffe, d.h. einer Verbrennung unterschiedlicher Brennstoffe in zwei zeitlich aufeinander folgenden Schritten, ist es einerseits möglich, bestimmte Brennstoffe gezielt in jenem Teil des Verbrennungszyklus zu verbrennen, wo dies am problemlosesten möglich und/oder am effizientesten ist, und andererseits die Eigenschaften eines Brennstoffes mit den Eigenschaften eines anderen Brennstoffes, der vorher oder nachher verbrannt wird, zu kombinieren, sodass insgesamt eine sehr effiziente Umsetzung der Brennstoffe in einem einzigen Verbrennungstakt erzielt werden kann.

Wenngleich die Erfindung nicht auf einen klassischen Viertaktmotor beschränkt ist und daher beispielsweise auch bei einem Zweitaktmotor zur Anwendung kommen kann, wird die Anwendung der Erfindung auf Viertaktmotore bevorzugt, bei denen in einem ersten Takt Gas in einen Brennraum zugeführt wird, in einem zweiten Takt das Gas verdichtet wird, in einem dritten Takt die Verbrennung stattfindet und im vierten Takt die Verbrennungsgase ausgestoßen werden, und in der Folge beschrieben. Der erste Teil der Kraftstoffzuführung kann beispielsweise auch noch in den Kompressionstakt hineinreichen.

Aus dem klassischen Otto- oder Diesel-Prozess wird erfindungsgemäß ein neuartiger Prozess, wobei der Verbrennungstakt in zwei Teile aufgeteilt wird. Dies wird in der Folge am Beispiel der Brennstoffe Wasserstoff und Diesel beschrieben.

Im ersten Prozesstakt wird, wie an sich bekannt, ein Luft/Wasserstoffgemisch, angesaugt. Im zweiten Prozesstakt wird das Brennstoff/Luftgemisch verdichtet. Im ersten Schritt des dritten Prozesstaktes wird das Brennstoff/Luftgemisch mit Hilfe einer Zündeinrichtung gezündet und verbrennt durch die hohe Flammengeschwindigkeit sehr rasch. Im zweiten Schritt des dritten Prozesstaktes wird in den bereits fast vollständig ausgebrannten Zylinder ein flüssiger Dieselkraftstoff eingespritzt. Durch die bereits bestehenden, hohen Temperaturen entzündet sich dieser mit sehr kleinem Zündverzug, wodurch der Energiegehalt und die Temperatur, sowie der Druck des Zylinders weiter gesteigert wird. Im vierten Prozesstakt wird das verbrannte Gemisch ausgestoßen.

In einer bevorzugten und daher nicht zwingenden Ausführungsform der Erfindung wird dementsprechend während das Ansaugtaktes ein Kraftstoff/Luftgemisch mit hohem Luftüberschuss angesaugt und dieses Gemisch dann mit Hilfe einer Fremdzündung (z.B. einer Zündkerze) entzündet. Nahe dem oberen Totpunkt ist das Gemisch bereits weitgehend verbrannt und es erfolgt eine weitere Kraftstoffzufuhr, die mit Hilfe des Restsauerstoffes zu einer späteren Verbrennung dieses Anteiles führt.

Diese Vorgangsweise ist insbesondere bei der Verwendung von reinem Wasserstoff von großem Vorteil. Durch die im zweiten Schritt des dritten Prozesstaktes eingebrachte Energie ist es nicht nur möglich, eine hohe Sollleistung zu erreichen, sondern zusätzlich auch die thermische Energie für den Turbolader bereitzustellen und somit die Leistungsdichte des Motors auf ein ähnliches Niveau wie das eines baugleichen Dieselmotors zu heben.

Die Erfindung ist nicht auf das vorstehend beschriebene Beispiel beschränkt, bei welchem über einen Gasmischer oder eine Gaseindüsung in den Ansaugtrakt ein Gemisch aus Luft und erstem Brennstoff in den Zylinder angesaugt wird. Vielmehr ist die Erfindung beispielsweise auch bei einer Direkteinspritzung anwendbar, bei der während des Verdichtungstaktes auch der benötigte Kraftstoff in den Brennraum eingespritzt wird. Eine Saugrohreinspritzung oder eine Kombination aller vorgenannten Systeme bzw. anderer Systeme ist ebenso möglich.

Bevorzugt ist bei der Erfindung, wenn das Gemisch aus Luft und erstem Brennstoff fremdgezündet wird. Die alternative Möglichkeit einer Selbstzündung ist im Rahmen der Erfindung aber ebenso möglich.

Weiters ist bei der Erfindung bevorzugt, dass die Verbrennung des ersten Brennstoffes im Wesentlichen in einem Gleichraumprozess erfolgt. Dies gilt insbesondere für Brennstoffe mit einer hohen Zündwilligkeit und einer hohen Flammengeschwindigkeit, was insbesondere für Wasserstoff zutrifft.

Insbesondere ist bei der Erfindung bevorzugt, dass der Schwerpunkt der Verbrennung des ersten Brennstoffes nahe dem oberen Totpunkt liegt. Wenn der Schwerpunkt der Verbrennung des ersten Brennstoffes höchstens +-8° vom oberen Totpunkt abweicht, hat dies den Vorteil, dass damit insbesondere im Volllastbereich die Klopfneigung gering gehalten werden kann, und andererseits für die Verbrennung des zweiten Brennstoffes ausreichend Zeit verbleibt. Dies gilt insbesondere, wenn der Schwerpunkt der Verbrennung des ersten Brennstoffes höchstens +-5° und insbesondere höchstens +-3° vom oberen Totpunkt abweicht. Insbesondere im Teillastbereich ist es aber auch möglich, dass der Schwerpunkt der Verbrennung des ersten Brennstoffes bis zu +15° vom oberen Totpunkt abweicht.

Zusätzlich oder alternativ ist bei der Erfindung bevorzugt, wenn die Verbrennung des zweiten Brennstoffes im Wesentlichen in einem Gleichdruckprozess erfolgt, wie dies beispielsweise beim zweiten Teil der Verbrennung nach dem oberen Totpunkt bei einem Dieselmotor stattfindet.

Um eine möglichst problemlose und effiziente Verbrennung im gesamten dritten Takt zu erzielen, ist bei der Erfindung weiters bevorzugt, wenn der Summenschwerpunkt aus Gleichdruck- und Gleichraum-verbrennung 7 bis 20° nach dem oberen Totpunkt liegt.

Der Einspritzzeitpunkt des zweiten Brennstoffes in den Brennraum wird so gewählt, dass wenigstens 80% und besonders bevorzugt wenigstens 90% des ersten Brennstoffes verbrannt sind.

Durch einen frühen Einspritzzeitpunkt kann der Summenschwerpunkt in Richtung zum oberen Totpunkt verschoben und der Druck im Brennraum erhöht werden, womit auch eine sichere Selbstzündung gewährleistet werden kann. Durch einen späteren Einspritzzeitpunkt können Druckspitzen gemindert und der Verbrennungsvorgang insgesamt verlängert werden, um die Abgastemperatur unmittelbar zu beeinflussen.

Insgesamt ist es bei der Erfindung bevorzugt, wenn der erste Brennstoff eine höhere Verbrennungsgeschwindigkeit als der zweite Brennstoff aufweist, damit die Verbrennung des zweiten Brennstoffes einerseits durch die schnelle Verbrennung des ersten Brennstoffes möglichst frühzeitig und andererseits energetisch effektiv verlaufen kann.

Die geometrische Auslegung des Motors wird bevorzugt so gewählt, dass die kombinierte Verbrennung bei einem Verdichtungsverhältnis ε von 6 bis 11 stattfindet. Der Vorteil dieses Verhältnisses liegt darin, dass auf die Klopfneigung des Kraftstoffes eingegangen und damit ein Leistungsmaximum für den ersten Anteil des Kraftstoffes erreicht werden kann.

Weiters ist bei der Erfindung bevorzugt, wenn die Verbrennung des ersten Brennstoffes bei einem Kraftstoff/Luftverhältnis λ von 2,5 bis 7 stattfindet. Der Vorteil dieses Verhältnisses liegt darin, dass speziell mit Wasserstoff der Motor drosselfrei und mit hohem Wirkungsgrad betrieben werden kann.

Als Brennstoffe werden bei der Erfindung als erster Brennstoff Wasserstoff und als zweiter Brennstoff Diesel verwendet.
Wie bereits einleitend erwähnt, sind im Rahmen der Erfindung als erster und zweiter Brennstoff auch beliebige Mischungen der vorstehend als bevorzugt angegebenen Brennstoffe möglich. Dem ersten Brennstoff können daher auch Anteile des zweiten Brennstoffes beigemengt werden und umgekehrt.

Im Rahmen der Erfindung ist auch nicht ausgeschlossen, dass sequentiell mehr als zwei, insbesondere drei, Brennstoffe in einem Verbrennungstakt verbrannt werden.

Insbesondere ist bei dem ersten Brennstoff, also Wasserstoff, aber nicht ausschließlich hierfür, bevorzugt, wenn der energetische Anteil des ersten Brennstoffes mindestens 50% beträgt, was durch das erfindungsgemäße Verfahren ermöglicht wird und einen Einsatz von derartigen Brennstoffen in einem erheblichen Ausmaß auch bei Motoren mit hoher Leistungsdichte ermöglicht.

Ein besonders geeignetes Verfahren zur Regelung des erfindungsgemäßen Verfahrens besteht darin, dass anhand von Messdaten eines Drucksensors mit einer Closed Loop Regelung die Massenaufteilung des ersten und zweiten Brennstoffes nach den Kriterien für einen besten Wirkungsgrad geregelt wird.

Alternativ kann ein besonders geeignetes Verfahren zur Regelung des erfindungsgemäßen Verfahrens auch darin bestehen, dass anhand von Messdaten eines Drucksensors mit einer Closed Loop Regelung die Massenaufteilung des ersten und zweiten Brennstoffes nach den Kriterien für eine beste NOx Emissionen geregelt wird.

Schließlich kann ein besonders geeignetes Verfahren zur Regelung des erfindungsgemäßen Verfahrens auch darin bestehen, dass anhand von Messdaten eines Drucksensors mit einer Closed Loop Regelung die Massenaufteilung des ersten und zweiten Brennstoffes nach den Erfordernissen der Aufladung geregelt wird.

Weitere Merkmale und Vorteile der Erfindung ergeben sich aus der nachfolgenden Beschreibung bevorzugter, den Schutzbereich nicht beschränkender, Ausführungsbeispiele der Erfindung unter Bezugnahme auf die angeschlossenen Zeichnungen. Es zeigt:
- Fig. 1: ein beispielhaftes Diagramm mit einem Druckverlauf in einem Brennraum am Beispiel Wasserstoff und Diesel,
- Fig. 2: ein beispielhaftes Diagramm mit einem Wärmeverlauf in einem Brennraum am Beispiel Wasserstoff und Diesel, und
- Fig. 3: eine grob schematische Darstellung eines Zylinderkopfes am oberen Ende eines Zylinders.

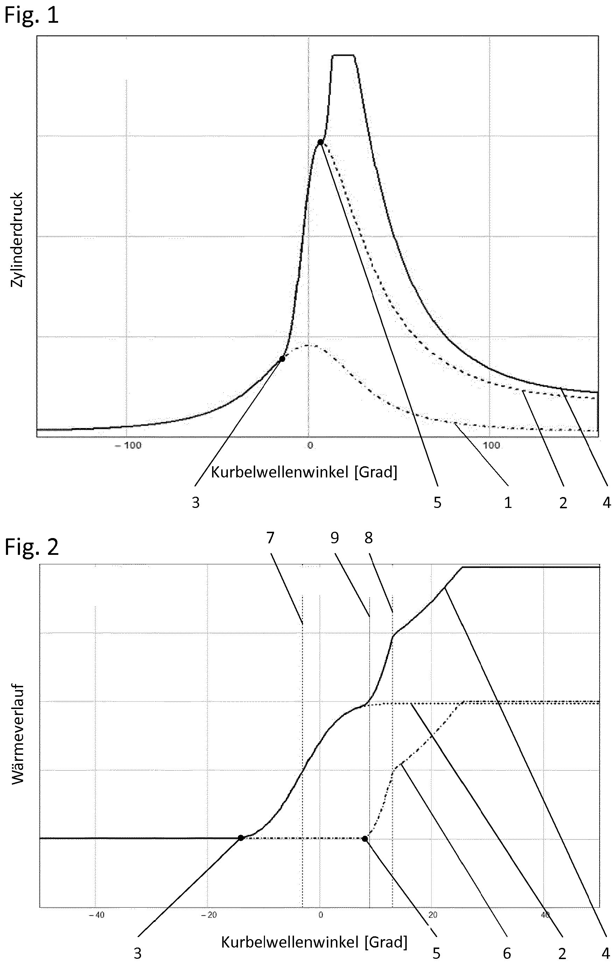

In Fig. 1 ist beispielhaft ein Diagramm mit einem Druckverlauf in einem Brennraum dargestellt, wobei allerdings die beiden dargestellten Takte, nämlich der Ansaugtakt und der Verbrennungstakt, unvollständig, nämlich nur von etwa -150° bis +150°, dargestellt sind. Auf der Abszisse des Diagramms ist der Kurbelwellenwinkel aufgetragen. Beim Kurbelwellenwinkel von 0° befindet sich der Zylinder am oberen Totpunkt. Auf der Ordinate des Diagramms ist der Druck im Zylinder bzw. im Brennraum aufgetragen.

Die unterste Kurve 1 im Diagramm stellt den Druckverlauf im Brennraum ohne Brennstoff dar (Verdichtungskurve). Die mittlere Kurve 2 stellt den Druckverlauf dar, wenn in den Brennraum ein Gemisch aus Luft und Wasserstoff mit einem hohen Überschuss von Luft, beispielsweise mit einem λ von 3, zugeführt und kurz vor Punkt 3 gezündet wird. Die Kurve 4 stellt den Druckverlauf dar, wenn nach dem Zünden des Gemisches aus Luft und Wasserstoff kurz vor Punkt 5 zusätzlich Dieselbrennstoff in den Brennraum eingespritzt wird und dort zündet. Zu diesem Zeitpunkt sind beispielsweise bereits 95% des Wasserstoffes verbrannt.

In Fig. 2 ist auf der Ordinate der Wärmeverlauf und auf der Abszisse wiederum der Kurbelwellenwinkel aufgetragen. Die Kurve 2 zeigt den Verlauf bzw. die Zunahme der Wärme im Brennraum, nachdem der Wasserstoff kurz vor Punkt 3 gezündet wurde, und stellt nur die beim Verbrennen des Wasserstoffes entstehende Wärme dar. Die Kurve 6 zeigt den Verlauf bzw. die Zunahme der Wärme im Brennraum, die ausschließlich durch die Verbrennung des Diesels entsteht, nachdem dieser kurz vor dem Punkt 5 gezündet hat. Die Kurve 4 zeigt schließlich den Summenverlauf der Wärme, die durch die Verbrennung des Wasserstoffes und des Diesels erzeugt wird.

Mit der Linie 7 ist der Schwerpunkt der Verbrennung des ersten Brennstoffes, also Wasserstoff, gekennzeichnet, und mit der Linie 8 der Schwerpunkt der Verbrennung des zweiten Brennstoffes, also Diesel. Der Summenschwerpunkt aus der Verbrennung des ersten und des zweiten Brennstoffes ist durch die Linie 9 gekennzeichnet. Es ist im Diagramm von Fig. 2 zu sehen, dass der Schwerpunkt der Verbrennung des ersten Brennstoffes bei etwa -3°, also nahe dem oberen Totpunkt, der Schwerpunkt der Verbrennung des zweiten Brennstoffes bei ca. 13° und der Summenschwerpunkt der Verbrennung bei etwa 8° liegt.

Durch Veränderung der Menge des ersten und/oder des zweiten Brennstoffes, des Zeitpunktes bzw. Winkels der Zündung des ersten Kraftstoffes und des Zeitpunktes der Einspritzung des zweiten Brennstoffes können sowohl die Lagen der Schwerpunkte bzw. des Summenschwerpunktes als auch die Massenaufteilung und der Druckverlauf verändert werden.

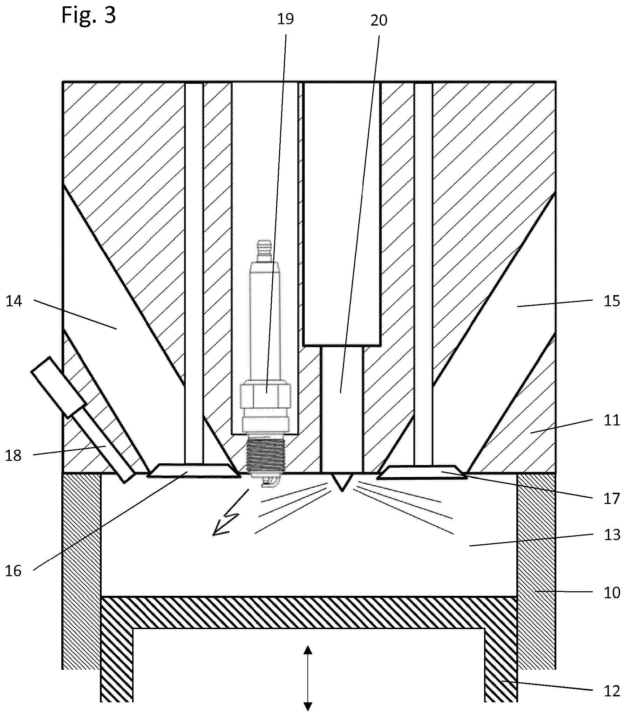

In Fig. 3 ist grob schematisch ein erfindungsgemäßer Zylinder 10 mit einem Zylinderkopf 11 und einem Kolben 12 dargestellt, die einen Brennraum 13 einschließen. Diese Teile sind wie an sich im Stand der Technik hinlänglich bekannt ausgeführt. Insbesondere sind ein Einlasskanal 14, ein Auslasskanal 15, sowie entsprechend ein Einlassventil 16 und ein Auslassventil 17 vorgesehen, ebenso wie ein Drucksensor 18. Im Unterschied zu einem herkömmlichen Verbrennungsmotor sind beim erfindungsgemäßen Verbrennungsmotor jedoch sowohl eine Zündkerze 19 zum Zünden des ersten Brennstoffes als auch eine Einspritzdüse 20 für den zweiten Brennstoff vorgesehen. Wie an sich im Stand der Technik bekannt, kann pro Zylinder 10 natürlich auch mehr als ein Einlasskanal 14, mehr als ein Auslasskanal 15, sowie entsprechend ein oder mehrere Einlassventile 16 und ein oder mehrere Auslassventile 17 vorgesehen sein, ebenso wie mehr als eine Zündkerze 19 und mehr als eine Einspritzdüse 20.

Mit dem Drucksensor 18 wird der Istzustand der Verbrennung überwacht. In einer sogenannten "Closed Loop" Regelung kann anhand der Messdaten des Drucksensors 18 die Massenaufteilung des ersten und zweiten Brennstoffes nach den Kriterien für einen besten Wirkungsgrad (gemeinsame Schwerpunktlage der Verbrennung) geregelt werden. Anhand der Messdaten des Drucksensors 18 kann aber auch die Massenaufteilung des ersten und zweiten Brennstoffes nach den Kriterien für eine beste NOx Emissionen geregelt werden. Schließlich kann anhand der Messdaten des Drucksensors 18 auch die Massenaufteilung des ersten und zweiten Brennstoffes nach den Erfordernissen der Aufladung geregelt werden. Selbstverständlich können anhand der Messdaten des Drucksensors 18 auch der Zündzeitpunkt der Zündkerze 19 und der Einspritzzeitpunkt der Einspritzdüse 20 optimiert werden.

## Patentansprüche

1. Verfahren zum Betreiben eines Verbrennungsmotors, bei dem in einem Verbrennungstakt ein Luft-Brennstoff-Gemisch verbrannt wird, wobei im Verbrennungstakt sequentiell unterschiedliche Brennstoffe verbrannt werden, und wobei als erster Brennstoff Wasserstoff verwendet wird, **dadurch gekennzeichnet, dass** als zweiter Brennstoff Diesel verwendet wird, und dass der zweite Brennstoff in den fast vollständig ausgebrannten Brennraum (13) eingespritzt wird, nachdem wenigstens 80% des ersten Brennstoffes verbrannt sind.

2. Verfahren nach Anspruch 1, **dadurch gekennzeichnet, dass** in einem ersten Takt Gas in den Brennraum zugeführt wird, in einem zweiten Takt das Gas verdichtet wird, in einem dritten Takt die Verbrennung stattfindet und im vierten Takt die Verbrennungsgase ausgestoßen werden.

3. Verfahren nach Anspruch 2, **dadurch gekennzeichnet, dass** im zweiten Takt nur Luft oder Gas in Form eines Gemisches aus Luft und dem ersten Brennstoff verdichtet wird.

4. Verfahren nach Anspruch 2 oder 3, **dadurch gekennzeichnet, dass** am Beginn des dritten Taktes der erste Brennstoff direkt in den Brennraum eingespritzt wird.

5. Verfahren nach einem der Ansprüche 1 bis 4, **dadurch gekennzeichnet, dass** das Gemisch aus Luft und erstem Brennstoff fremdgezündet wird oder dass das Gemisch aus Luft, den Verbrennungsgasen aus der Verbrennung des ersten Brennstoffes und dem zweiten Brennstoff selbst zündet.

6. Verfahren nach einem der Ansprüche 1 bis 5, **dadurch gekennzeichnet, dass** die Verbrennung des ersten Brennstoffes im Wesentlichen in einem Gleichraumprozess erfolgt und/oder dass die Verbrennung des zweiten Brennstoffes im Wesentlichen in einem Gleichdruckprozess erfolgt.

7. Verfahren nach einem der Ansprüche 1 bis 6, **dadurch gekennzeichnet, dass** der Schwerpunkt der Verbrennung des ersten Brennstoffes nahe dem oberen Totpunkt liegt, und bevorzugt höchstens +-8°, besonders bevorzugt höchstens +-5° und insbesondere höchstens +-3° vom oberen Totpunkt abweicht.

8. Verfahren nach Anspruch 6 oder 7, **dadurch gekennzeichnet, dass** der Summenschwerpunkt aus Gleichdruck- und Gleichraumverbrennung 7 bis 20° nach dem oberen Totpunkt liegt.

9. Verfahren nach einem der Ansprüche 1 bis 8, **dadurch gekennzeichnet, dass** der zweite Brennstoff direkt in den Brennraum (13) eingespritzt wird.

10. Verfahren nach Anspruch 9, **dadurch gekennzeichnet, dass** der zweite Brennstoff in den Brennraum (13) eingespritzt wird, nachdem wenigstens 90% des ersten Brennstoffes verbrannt sind.

11. Verfahren nach einem der Ansprüche 1 bis 10, **dadurch gekennzeichnet, dass** der erste Brennstoff eine höhere Verbrennungsgeschwindigkeit als der zweite Brennstoff aufweist.

12. Verfahren nach einem der Ansprüche 1 bis 11, **dadurch gekennzeichnet, dass** die kombinierte Verbrennung aller Brennstoffe bei einem Verdichtungsverhältnis (ε) von 6 bis 11 stattfindet.

13. Verfahren nach einem der Ansprüche 1 bis 12, **dadurch gekennzeichnet, dass** die Verbrennung des ersten Brennstoffes bei einem Kraftstoff/Luftverhältnis (A) von 2,5 bis 7 stattfindet.

14. Verfahren nach einem der Ansprüche 1 bis 13, **dadurch gekennzeichnet, dass** der energetische Anteil des ersten Brennstoffes mindestens 50% beträgt.

15. Verfahren nach einem der Ansprüche 1 bis 14, **dadurch gekennzeichnet, dass** der minimale Dieselanteil zwischen Null und der Leerlaufmenge, vorzugsweise max. 10 % der Volllastmenge, des jeweiligen Injektors ist.

## Claims

1. Method for operating an internal combustion engine, in which an air-fuel mixture is burnt in a combustion cycle, wherein different fuels are sequentially burnt in the combustion cycle, and wherein hydrogen is used as the first fuel, **characterized in that** diesel is used as the second fuel, and **in that** the second fuel is injected into the almost completely burnt-out combustion chamber (13) after at least 80% of the first fuel has been combusted.

2. Method according to claim 1, **characterized in that** in a first cycle, gas is fed into the combustion chamber, in a second cycle the gas is compressed, in a third cycle combustion takes place and in the fourth cycle the combustion gases are expelled.

3. Method according to claim 2, **characterized in that** in the second cycle, only air or gas in the form of a mixture of air and the first fuel is compressed.

4. Method according to claim 2 or 3, **characterized in that** at the beginning of the third cycle the first fuel is injected directly into the combustion chamber (13).

5. Method according to one of claims 1 to 4, **characterized in that** the mixture of air and first fuel is externally ignited, or **in that** the mixture of air, the combustion gases from the combustion of the first fuel and the second fuel ignites itself.

6. Method according to one of claims 1 to 5, **characterized in that** the combustion of the first fuel takes place essentially in an isochoric process and/or **in that** the combustion of the second fuel takes place essentially in an isobaric process.

7. Method according to one of claims 1 to 6, **characterized in that** the center of gravity of the combustion of the first fuel is near top dead center, and preferably deviates from top dead center by at most +-8°, particularly preferably by at most +-5° and in particular by at most +-3°.

8. Method according to claim 6 or 7, **characterized in that** the cumulative center of gravity of the isobaric and isochoric combustion of the first fuel is 7 to 20° after the top dead center.

9. Method according to one of claims 1 to 8, **characterized in that** the second fuel is injected directly into the combustion chamber (13).

10. Method according to claim 9, **characterized in that** the second fuel is injected into the combustion chamber (13) after at least 90% of the first fuel has been combusted.

11. Method according to one of claims 1 to 10, **characterized in that** the first fuel has a higher combustion rate than the second fuel.

12. Method according to one of claims 1 to 11, **characterized in that** the combined combustion of all fuels takes place at a compression ratio (ε) of 6 to 11.

13. Method according to one of claims 1 to 12, **characterized in that** the combustion of the first fuel takes place at a fuel/air ratio (λ) of 2.5 to 7.

14. Method according to one of claims 1 to 13, **characterized in that** the energetic proportion of the first fuel is at least 50%.

15. Method according to one of claims 1 to 14, **characterized in that** the minimum diesel proportion is between zero and the idling quantity, preferably at most 10% of the full load quantity, of the respective injector.

## Revendications

1. Procédé pour la conduite d'un moteur à combustion interne, dans lequel un mélange d'air et de carburant est brûlé dans un temps de combustion, différents carburants étant brûlés successivement pendant la combustion et le premier carburant utilisé étant de l'hydrogène, **caractérisé en ce que** le deuxième carburant utilisé est du gazole et **en ce que** le deuxième carburant est injecté dans la chambre de combustion (13) où la combustion est presque complète, après qu'au moins 80 % du premier carburant est brûlé.

2. Procédé selon la revendication 1, **caractérisé en ce que** du gaz est amené dans la chambre de combustion dans un premier temps, le gaz est comprimé dans un deuxième temps, la combustion a lieu dans le troisième temps et les gaz de combustion sont éjectés dans le quatrième temps.

3. Procédé selon la revendication 2, **caractérisé en ce que** dans le deuxième temps, de l'air seul ou un gaz sous la forme d'un mélange d'air et du premier carburant est comprimé.

4. Procédé selon la revendication 2 ou 3, **caractérisé en ce qu'**au début du troisième temps, le premier carburant est injecté directement dans la chambre de combustion (13).

5. Procédé selon l'une des revendications 1 à 4, **caractérisé en ce que** le mélange d'air et du premier carburant est allumé par une source externe ou **en ce que** le mélange d'air, de gaz de combustion produits par la combustion du premier carburant et du deuxième carburant s'allume de lui-même.

6. Procédé selon l'une des revendications 1 à 5, **caractérisé en ce que** la combustion du premier carburant se déroule pour l'essentiel selon un processus isovolumique et/ou **en ce que** la combustion du deuxième carburant se déroule pour l'essentiel selon un processus isobare.

7. Procédé selon l'une des revendications 1 à 6, **caractérisé en ce que** le barycentre de la combustion du premier carburant est proche du point mort haut, et s'écarte de préférence de +-8° au maximum, de préférence de +-5° au maximum et en particulier de +-3° au maximum du point mort haut.

8. Procédé selon la revendication 6 ou 7, **caractérisé en ce que** le barycentre de la somme de la combustion isobare et de la combustion isovolumique se situe 7 à 20° après le point mort haut.

9. Procédé selon l'une des revendications 1 à 8, **caractérisé en ce que** le deuxième carburant est injecté directement dans la chambre de combustion (13).

10. Procédé selon la revendication 9, **caractérisé en ce que** le deuxième carburant est injecté dans la chambre de combustion (13) après qu'au moins 90 % du premier carburant a brûlé.

11. Procédé selon l'une des revendications 1 à 10, **caractérisé en ce que** le premier carburant présente une vitesse de combustion plus élevée que le deuxième carburant.

12. Procédé selon l'une des revendications 1 à 11, **caractérisé en ce que** la combustion combinée de tous les carburants se déroule sous un rapport de compression (ε) de 6 à 11.

13. Procédé selon l'une des revendications 1 à 12, **caractérisé en ce que** la combustion du premier carburant se déroule avec un rapport carburant/air (λ) de 2,5 à 7.

14. Procédé selon l'une des revendications 1 à 13, **caractérisé en ce que** la part énergétique du premier carburant est d'au moins 50 %.

15. Procédé selon l'une des revendications 1 à 14, **caractérisé en ce que** la proportion minimale de gazole est comprise entre zéro et le débit au point mort, de préférence de 10 % au maximum du débit à plein charge, de l'injecteur concerné.
